# EUROPÄISCHE PATENTSCHRIFT

(11) **EP 2 471 645 B1**
(45) Veröffentlichungstag und Bekanntmachung des Hinweises auf die Patenterteilung: **23.07.2014**
(21) Anmeldenummer: 11010263.9
(22) Anmeldetag: 28.12.2011
(51) Int. Cl.: B29C 45/14, B29B 17/00

(54) **Verfahren zur Herstellung eines Bauteils**
Method for manufacturing a component
Procédé de fabrication d'un élément structural

(30) Priorität: 29.12.2010 DE 102010056360
(43) Veröffentlichungstag der Anmeldung: 04.07.2012
(73) Patentinhaber: Däbritz, Michael, 75417 Mühlacker (DE)
(72) Erfinder: Däbritz, Michael, 75417 Mühlacker (DE)
(74) Vertreter: Schön, Thilo

(56) Entgegenhaltungen:
- EP-A1- 1 486 311
- EP-A2- 0 473 990
- DD-A1- 265 409
- DE-A1- 3 128 623
- DE-A1- 3 917 751
- JP-A- 3 099 814
- US-A- 5 736 081

## Beschreibung

Die Erfindung betrifft ein Verfahren zur Herstellung eines Bauteils nach Anspruch 1.

Es ist in der Technik bekannt, plattenförmige Bauteile, welche insbesondere als Bodenplatten verwendet werden können, im Spritzgussverfahren aus Kunststoff herzustellen.

Solche plattenförmigen Bauteile haben eine relativ große Fläche und eine im Verhältnis zur Fläche relativ geringe Dicke. Typische Abmessung eines solchen Bauteils sind 300 X 300 mm. Um die Menge des eingespritzten Kunstoffmaterials zu reduzieren und um wirtschaftliche Abkühlzeiten des Bauteils in der Spritzgussform zu erzielen, weisen solche Bauteile in der Regel Stege auf, das heißt, dass das Bauteil nicht über seine ganze Fläche eine einheitliche Dicke hat, sondern dass sich auf der Bodenseite des Bauteils Nuten befinden, welche durch die Stege voneinander getrennt sind. Ein solches Bauteil hat beispielsweise eine maximale Dicke von 10 mm und eine minimale Dicke von beispielsweise nur 3 mm. Dies hat den Nachteil, dass die maximale Druckbelastung, insbesondere die maximale punktuelle Druckbelastung, die ein solches Bauteil aufnehmen kann, begrenzt ist.

In der Technik besteht weiterhin das Problem, dass in der Kunststoffverarbeitung, aber auch bei anderen Prozessen, Abfallgranulate beziehungsweise Abfälle, welche zu einem Granulat vermahlen werden können, anfallen, für die es keine geeignete Wiederverwendung gibt, insbesondere dann, wenn die Granulate aus verschiedenen Materialien, beispielsweise aus verschiedenen Kunststoffen oder aus Kunststoffen und Metallen bestehen.

Aus der gattungsbildenen US 5,736,081 ist ein Verfahren zur Herstellung eines plattenförmigen Bauteils bekannt, bei welchem ein Granulat von einem Kunststoff umspritzt wird. Es wird ein zweiteiliges Werkzeug genutzt, wobei eine erste Werkzeughälfte als untere Werkzeughälfte und eine zweite Werkzeughälfte als obere Werkzeughälfte dient. In einem ersten Verfahrensschritt wird das Granulat auf die untere Werkzeughälfte aufgestreut, dann wird das Werkzeug geschlossen und der Kunststoff wird von der Seite her eingespritzt. In der Praxis können hierbei nur relativ kleine plattenförmige Bauteile hergestellt werden, da sich sonst eine vollständige und homogene Füllung des Hohlraums mit Kunststoffmaterial nicht sicherstellen lässt.

Desweiteren wird nach auf die DE 3917751 A1 verwiesen.

Die genannten Aufgaben werden durch ein Verfahren mit den Merkmalen des Anspruchs 1 gelöst.

Das Bauteil wird nicht vollständig aus einem einzigen gussfähigen Kunststoff gefertigt, sondern das Bauteil enthält Granulat, welches von einem gussfähigen Kunststoff umspritzt ist. Dies hat mehrere Vorteile: Zum einen benötigt man auch dann, wenn das entsprechende Bauteil vollkommen massiv gefertigt wird, nur eine deutlich reduzierte Menge von gussfähigem Kunststoff, welcher ein wertvoller Rohstoff ist. Weiterhin ist das Granulat zu Beginn des Einspritzvorganges kalt, so dass die Gesamtwärmemenge des in einer Spritzgussform hergestellten Bauteils nach Abschluss des Einspritzvorgangs des gussfähigen Kunststoffmaterials gegenüber herkömmlichen Verfahren geringer ist, so dass deutlich geringere Abkühlzeiten notwendig werden und somit deutlich kühlere Zykluszeiten erreicht werden können. Schließlich wird eine sinnvolle Verwendung von Granulat zur Verfügung gestellt, welches bislang als Abfall entsorgt werden musste.

Erfindungsgemäß wird ein dreiteiliges Werkzeug eingesetzt. Hierbei bilden zwei Werkzeughälften die Spritzgussform. Befinden sich die beiden Werkzeughälften in ihrer geschlossenen Stellung, in welchem sie einen Hohlraum umschließen, so verbleibt zunächst noch eine Granulat-Einfüllöffnung, durch welche das Granulat in den Hohlraum eingefüllt wird. Nachdem das Granulat durch die Granulat-Einfüllöffnung eingefüllt wurde, wird die Granulat-Einfüllöffnung geschlossen und flüssiger Kunststoff durch wenigstens eine Einspritzöffnung eingespritzt.

Häufig wird es zu bevorzugen sein, dass das Granulat ein Abfallprodukt ist, es ist jedoch auch möglich, dass das Granulat kein Abfallprodukt ist, sondern beispielsweise aus mineralischen Bestandteilen wie kleinen Steinen oder ähnlichem besteht oder solche Bestandteile zumindest enthält.

Das Granulat kann aus vielen unterschiedlichen Fraktionen gemischt sein, beispielsweise aus verschiedenen Kunststoffen, Metallen und mineralischen Bestandteilen bestehen.

Die Erfindung wird nun anhand eines Ausführungsbeispiels mit Bezug auf die Figuren näher erläutert. Hierbei zeigen:
- Figur 1: eine Spritzgussform in einer perspektivischen Ansicht in einer sehr schematischen Darstellung,
- Figur 2: einen Schnitt durch das Werkzeug aus Figur 1 entlang der Schnittebene A während eines ersten Verfahrensschrittes, ebenfalls in einer sehr schematischen Darstellung,
- Figur 3: das in Figur 2 Gezeigte nach Abschluss des ersten Verfahrensschrittes,
- Figur 4: das in Figur 3 Gezeigte nach Abschluss eines zweiten Verfahrensschrittes und
- Figur 5: ein Schnitt durch das Werkzeug aus Figur 1 nach Abschluss des Herstellungsprozesses, ebenfalls in einer sehr schematischen Darstellung.

Es muss zunächst vorausgeschickt werden, dass die Figuren sehr schematisch und nicht zwingend maßstäblich sind.

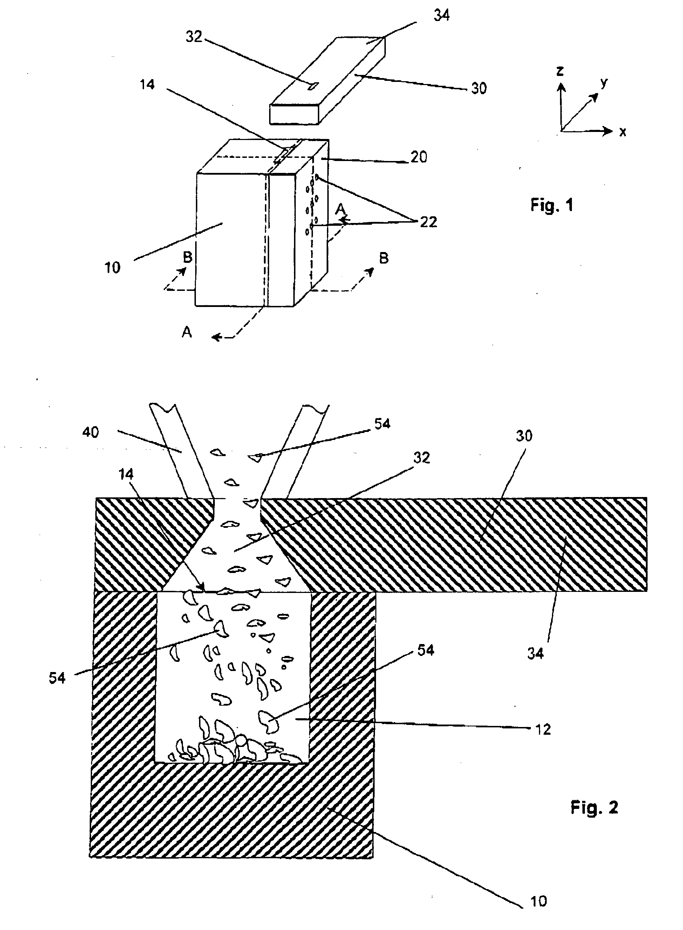

Figur 1 zeigt ein Spritzgusswerkzeug, welches zum Durchführen des erfindungsgemäßen Verfahrens und zur Herstellung eines erfindungsgemäßen Bauteils geeignet ist. Das Werkzeug weist im Wesentlichen drei Bestandteile auf, nämlich eine erste Werkzeughälfte 10, welche einen Hohlraum 12 (Fig. 2) umschließt, eine zweite Werkzeughälfte 20, durch welche sich Einspritzkanäle 22 erstrecken, die jeweils in einer mit dem Hohlraum verbundenen Einspritzöffnung enden, und einen Schieber 30, dessen Y-Position bezüglich der beiden Werkzeughälften 10, 20 veränderbar ist. Die Position in X-Richtung der beiden Werkzeughälften 10, 20 ist in üblicher Weise zueinander veränderbar, so dass das Werkzeug geöffnet und geschlossen werden kann.

Wie man der Figur 1 und auch der Figur 2 entnimmt, ist der Hohlraum 12 nach oben offen, das heißt, der Hohlraum 12 weist eine Granulat-Einfüllöffnung 14 auf welche sich vorzugsweise über die gesamte Länge und die gesamte Breite (XY-Ebene) des Hohlraumes erstreckt. Der Schieber 30, welcher oberhalb der beiden Werkzeughälften 10, 20 angeordnet ist, weist einen Granulat-Einfüllkanal 32 auf, welcher sich nach unten trichterförmig aufweitet, so dass er auf der Seite des Schiebers 30, welcher in Richtung der beiden Werkzeughälften 10, 20 zeigt, dekkungsgleich mit der Granulat-Einfüllöffnung 14 ist. Oberhalb des Schiebers 30 kann ein Einfülltrichter 40 vorgesehen sein. Der Schieber 30 überlappt vorzugsweise beide Werkzeughälften 10, 20, wenn sich das Werkzeug in seinem geschlossenem Zustand befindet. Der Schieber 30 hat weiterhin einen geschlossenen Abschnitt 34, welcher keine Öffnung aufweist, so dass die Granulat-Einfüllöffnung 14 durch den Schieber 30 dicht verschlossen werden kann.

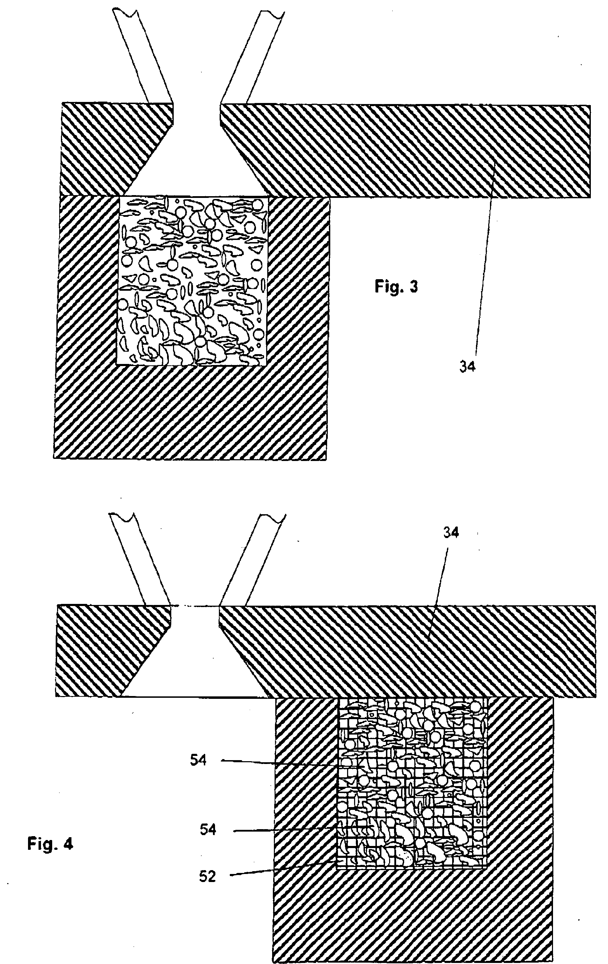

Die Figur 2 zeigt einen ersten Verfahrensschritt. Hier befindet sich der Granulat-Einfüllkanal 32 über der Granulat-Einfüllöffnung 14 und Granulat, welches aus einer Vielzahl von Partikeln 54 besteht, wird über den Granulat-Einfüllkanal 32 in den Hohlraum 12 eingefüllt. Ein typischer Durchmesser eines Partikels 54 beträgt zwischen 1 und 5 mm. Das Volumen eines typischen Partikels 54 beträgt weniger als 1% des Volumens des Hohlraumes 12, so dass der Hohlraum 12 relativ gleichmäßig mit Granulat befüllt wird. Dadurch, dass der Granulat-Füllkanal 32 bündig mit der Granulat-Einfüllöffnung 14 abschließt, wird eine gleichmäßige Füllung des Hohlraums 12 über seine gesamte Höhe, Breite und Länge erreicht. Die Befüllung mit dem Granulat 54 erfolgt drucklos, hier ausschließlich durch Schwerkraft. Es wäre jedoch auch möglich, das Granulat in den Hohlraum 12 einzublasen. Nach Abschluss der Füllung des Hohlraumes durch Granulat (Figur 3) liegen die Partikel 54 des Granulates in lockerer Schüttung im Hohlraum 12 und füllen dabei typischerweise ca. 70 % des Hohlraumes 12 aus.

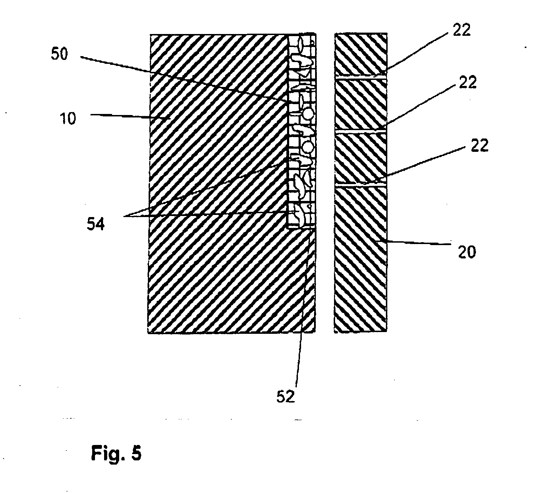

Ist die Füllung abgeschlossen, so wird der Schieber 30 in die in Figur 4 gezeigte Stellung gebracht und geschmolzener, heißer Kunststoff wird durch die Einspritzkanäle 22 in den Hohlraum 12 eingespritzt und füllt den verbleibenden Hohlraum vollständig aus. Der Einspritzdruck beträgt hier typischerweise 400 bis 1000 bar. Hierdurch werden die Partikel 54 vom heißen, fließfähigen eingespritzten Kunststoff 52 (dieser Kunststoff ist in den Figuren 4 und 5 mit karierter Schraffur dargestellt) vollständig umschlossen, so dass sich im entstehenden Bauteil 50 eine Struktur ergibt, wie sie in etwa Waschbeton entspricht. Je nach dem, aus welchem Material die Partikel 54 bestehen, können diese teilweise angeschmolzen werden, so dass sich auch eine stoffschlüssige Verbindung zwischen den Partikeln 54 und dem eingespritzten Kunststoff 52 bilden kann. Erforderlich ist eine solche stoffschlüssige Verbindung jedoch nicht, da die Partikel des Granulat schon allein durch ihren vollständigen ummantelnden Einschluss durch den eingespritzten Kunststoff sicher im Bauteil gehalten sind.

Ein Granulat kann aus einem oder mehreren Kunststoffen, aus mineralischen Bestandteilen, aus Metall oder einer Mischung dieser Materialien bestehen. Besteht das Granulat ganz oder teilweise aus Kunststoff, so ist dieser Kunststoff in der Regel zumindest teilweise verschieden vom eingespritzten Kunststoff 52.

Nach Abschluss des Einspritzens (zweiter Verfahrensschritt) und Abkühlen des Bauteils 50 werden erste und zweite Werkzeughälfte 10, 20 in gewohnter Weise auseinander gefahren und das Bauteil 50 kann entnommen werden. Das Bauteil 50 kann typischerweise eine Fläche zwischen 500 und 2500 cm² und eine Dicke zwischen 10 und 20 mm haben, also plattenförmig sein.

Die Druckbeständigkeit entspricht in etwa der Druckbeständigkeit eines solchen Bauteils, das vollständig aus eingespritzem Kunststoff 52 bestände.

Bevorzugte Verwendung einer solchen Platte ist eine Wand oder auch eine Bodenplatte.

Die Erfindung wurde anhand eines plattenförmigen Bauteils erläutert, es ist jedoch zu betonen, dass es auch möglich ist, andere Bauteile herzustellen, beispielsweise blockartige, stangenförmige oder im wesentlichen runde Bauteile.

Es ist noch zu betonen, dass der beschriebene Schieber des Werkzeugs auch komplexere Geometrien aufweisen kann, um beispielsweise Hinterschneidungen oder Kulissen entformen zu können. Weiterhin ist klar, dass es auch möglich ist, das Werkzeug so auszugestalten, dass der Schieber in anderen Richtungen als der gezeigten bewegt wird.

Als ummantelnde, eingespritzte Kunststoffe 52 eignet sich insbesondere Polypropylen, wobei jedoch grundsätzlich jeder thermoplastische Kunststoff verwendet werden kann.

### Bezugszeichenliste

- 10: erste Werkzeughälfte
- 12: Hohlraum
- 14: Granulat-Einfüllöffnung
- 20: zweite Werkzeughälfte
- 22: Einspritzkanal
- 30: Schieber
- 32: Granulat-Einfüllkanal
- 34: geschlossener Abschnitt
- 40: Einfüll-Trichter
- 50: Bauteil
- 52: eingespritzter Kunststoff
- 54: Partikel, Granulat

## Patentansprüche

1. Verfahren zur Herstellung eines Bauteils unter Verwendung eines Werkzeugs, welches eine aus einer ersten Werkzeughälfte (10) und einer zweiten Werkzeughälfte (20) bestehende Spritzgussform und einen Schieber (30) aufweist, wobei die erste Werkzeughälfte (10) einen Hohlraum (12) aufweist, wobei die zweite Werkzeughälfte (20) wenigstens eine Einspritzöffnung aufweist und wobei der Hohlraum (12) wenigstens eine Granulat-Einfüllöffnung (14) aufweist, mit folgenden Schritten:
- Einfüllen von Granulat (54) in den Hohlraum (12) der Spritzgussform durch die wenigstens eine Granulat-Einfüllöffnung (14) bei geschlossenem Zustand der beiden Werkzeughälften der Spritzgussform,
- Schließen der Granulat-Einfüllöffnung (14) mittels des Schiebers (30),
- Einspritzen von verflüssigtem Kunststoff (52) in den Hohlraum (12) durch die wenigstens eine Einspritzöffnung, so dass nach Abschluss des Einspritzvorgangs der Hohlraum (12) vollständig von Granulat (54) und Kunststoff (52) ausgefüllt ist,
- Offnen der Spritzgussform und Entnehmen des Kunststoffelements (50).

2. Verfahren nach Anspruch 1, **dadurch gekennzeichnet, dass** das Einfüllen des Granulats (54) drucklos, vorzugsweise von oben erfolgt.

3. Verfahren nach einem der vorangehenden Ansprüche, **dadurch gekennzeichnet, dass** das Einspritzen des Kunststoffs (52) mit einem Druck von wenigstens 400 bar erfolgt.

4. Verfahren nach einem der vorangehenden Ansprüche **dadurch gekennzeichnet, dass** das maximale Volumen von Partikeln (54) des Granulats 1 % des Volumens des Hohlraums (12) entspricht.

5. Verfahren nach einem der vorangehenden Ansprüche, **dadurch gekennzeichnet, dass** das Granulat (54) Kunststoffpartikel enthält.

6. Verfahren nach Anspruch 5, **dadurch gekennzeichnet, dass** die Kunststoff partikel aus einem Kunststoff bestehen, welcher vom eingespritzten Kunststoff (52) verschieden ist.

7. Verfahren nach Anspruch 5 oder Anspruch 6, **dadurch gekennzeichnet, dass** das Granulat (54) Kunststoffpartikel aus wenigstens zwei unterschiedlichen Kunststoffen enthält.

8. Verfahren nach einem der Ansprüche 5 bis 7, **dadurch gekennzeichnet, dass** das Granulat (54) Metall enthält.

9. Verfahren nach einem der Ansprüche 5 bis 8, **dadurch gekennzeichnet, dass** das Granulat (54) mineralische Partikel enthält.

## Claims

1. Method for manufacturing a component by using a tool which comprises an injection mould composed of a first tool half (10) and a second tool half (20), and a slide bar (30), wherein the first tool half (10) has a hollow space (12), wherein the second tool half (20) has at least one injection opening and wherein the hollow space (12) has at least one granulate filling opening (14),
and wherein the method comprises the steps of:
- filling of granulate (54) into the hollow space (12) of the injection mould through the at least one granulate filling opening (14) when the tool halves of the injection mould are in closed state,
- closing of the granulate filling opening (14) by means of the slide bar (30),
- injection of liquefied plastic (52) into the hollow space (12) through the at least one injection opening so that, after the end of the injection process, the hollow space (12) is completely filled with granulate and plastic,
- opening of the injection mould and removal of the plastic element (50).

2. Method according to claim 1, **characterised in that** the filling of the granulate (54) takes place without pressure, preferably from above.

3. Method according to any one of the preceding claims, **characterised in that** the injection of the plastic (52) takes place at a pressure of at least 400 bar.

4. Method according to any one of the preceding claims, **characterised in that** the maximum volume of particles (54) of the granulate corresponds to 1 % of the volume of the hollow space (12).

5. Method according to any one of the preceding claims, **characterised in that** the granulate (54) contains plastic particles.

6. Method according to claim 5, **characterised in that** the plastic particles are made of a plastic which is different from the injected plastic (52).

7. Method according to claim 5 or claim 6, **characterised in that** the granulate (54) contains plastic particles made of at least two different plastics.

8. Method according to any one of claims 5 to 7, **characterised in that** the granulate (54) contains metal.

9. Method according to any one of claims 5 to 8, **characterised in that** the granulate (54) contains mineral particles.

## Revendications

1. Procédé de fabrication d'un élément structural à l'aide d'un outil, ledit outil présente un moule de moulage par injection constitué d'un premier demi-outil (10) et d'un deuxième demi-outil (20) et un tiroir (30), le premier demi-outil (10) présentant une cavité (12), le deuxième demi-outil (20) présentant au moins un orifice d'injection et, la cavité (12) présentant au moins un orifice de remplissage de granulat (14), comprenant les étapes suivantes :
- Remplir la cavité (12) du moule de moulage par injection avec du granulat (54) à travers l'au moins un orifice de remplissage de granulat (14) lorsque les deux demi-outils du moule de moulage par injection sont à l'état fermé,
- Fermer l'orifice de remplissage de granulat (14) au moyen du tiroir (30),
- Injecter de la matière plastique (52) liquéfiée dans la cavité (12) à travers l'au moins un orifice d'injection, de sorte qu'à l'achèvement de l'opération d'injection, la cavité (12) soit complètement remplie de granulat (54) et de matière plastique (52),
- Ouvrir le moule de moulage par injection et retirer l'élément en matière plastique (50).

2. Procédé selon la revendication 1, **caractérisé en ce que** le remplissage de granulat (54) s'effectue sans pression, de préférence par le dessus.

3. Procédé selon l'une des revendications précédentes, **caractérisé en ce que** l'injection de matière plastique (52) s'effectue avec une pression d'au moins 400 bars.

4. Procédé selon l'une des revendications précédentes, **caractérisé en ce que** le volume maximal de particules (54) de granulat correspond à 1% du volume de la cavité (12).

5. Procédé selon l'une des revendications précédentes, **caractérisé en ce que** le granulat (54) contient des particules de matière plastique.

6. Procédé selon la revendication 5, **caractérisé en ce que** les particules de matière plastique sont constituées d'une matière plastique différente de la matière plastique (52) injectée.

7. Procédé selon la revendication 5 ou la revendication 6, **caractérisé en ce que** le granulat (54) contient des particules de matière plastique constituées d'aux moins deux matières plastiques différentes.

8. Procédé selon l'une des revendications 5 à 7, **caractérisé en ce que** le granulat (54) contient du métal.

9. Procédé selon l'une des revendications 5 à 8, **caractérisé en ce que** le granulat (54) contient des particules minérales.
